# EUROPEAN PATENT APPLICATION

(11) **EP 4 517 997 A2**
(43) Date of publication of application: **05.03.2025**
(21) Application number: 24781357.9
(22) Date of filing: 20.03.2024
(51) Int. Cl.: H01M 50/446, H01M 50/411, H01M 50/451, H01M 50/431, H01M 10/052, H01M 50/449

(54) **SEPARATOR FOR ELECTROCHEMICAL DEVICE AND ELECTROCHEMICAL DEVICE COMPRISING SAME**

(30) Priority: 24.03.2023 KR 20230038901; 19.03.2024 KR 20240037552
(71) Applicant: LG Energy Solution, Ltd., Seoul 07335 (KR)
(72) Inventor: KIM, Ji Hyeon, Daejeon 34122 (KR); SUNG, Dong Wook, Daejeon 34122 (KR); KA, Kyung Ryun, Daejeon 34122 (KR); SUNG, In Hyouk, Daejeon 34122 (KR); KIM, Ji Yeon, Daejeon 34122 (KR)
(74) Representative: Hoffmann Eitle
(86) International application number: PCT/KR2024/095592
(87) International publication number: WO 2024/205368

(57) **Abstract**

A separator for an electrochemical device includes a porous polymer substrate, and a porous coating layer formed on at least one surface of the porous polymer substrate, the porous coating layer includes inorganic particles and a polymer binder, the inorganic particles include, on surfaces thereof, a coating layer of a polymer including an amine group, and at least a portion of the polymer binder is crosslinked with the polymer including the amine group.

## Description

### Technical Field

This application is based on and claims priority from Korean Patent Application No. 10-2023-0038901, filed on March 24, 2023, with the Korean Intellectual Property Office, the disclosure of which is incorporated herein in its entirety by reference. The present disclosure relates to a separator for an electrochemical device and an electrochemical device including the separator.

### Background Art

Electrochemical devices convert chemical energy into electric energy using electrochemical reactions, and in recent years, lithium secondary batteries have been widely used in view of high energy density and voltage, long cycle life, and applicability in various fields.

A lithium secondary battery may include an electrode assembly fabricated using a positive electrode, a negative electrode, and a separator disposed between the positive and negative electrodes, and may be manufactured by accommodating the electrode assembly in a case with an electrolyte solution.

Meanwhile, in order to improve the performance and safety of secondary batteries adopting the electrochemical devices, improvements are being made on the characteristics of each of the positive electrode, the negative electrode, and the separator.

### DISCLOSURE

### Technical Problem

The present disclosure provides a separator for an electrochemical device that exhibits a reduced dimensional change rate in a high temperature wet state, a method of manufacturing the separator, and an electrochemical device including the separator.

Advantages of the present disclosure are not limited to those described above, and one of ordinary skill in the art of the present disclosure can clearly understand other advantages from the descriptions herein below.

### Technical Solution

According to an embodiment of the present disclosure, there is provided a separator for an electrochemical device including: a porous polymer substrate; and a porous coating layer formed on at least one surface of the porous polymer substrate, the porous coating layer includes inorganic particles and a polymer binder, the inorganic particles have, on surfaces thereof, a coating layer of a polymer including an amine group, and at least a portion of the polymer binder is crosslinked with the polymer including the amine group.

According to an embodiment of the present disclosure, the polymer including the amine group is dopamine or a derivative thereof.

According to an embodiment of the present disclosure, a thickness of the coating layer is about 2 nm to 20 nm.

According to an embodiment of the present disclosure, the polymer binder includes one or more selected from the group consisting of dextrin, polyetheretherketone, polyethersulfone, and polyacrylamide.

According to an embodiment of the present disclosure, the polymer binder includes a (co)polymer of a monomer selected from the group consisting of acrylate, acrylic acid, maleic acid, itaconic acid, methacrylic acid, and carboxyethyl acrylate.

According to an embodiment of the present disclosure, about 60 wt% to 80 wt% of the polymer binder is crosslinked with the polymer including the amine group.

According to an embodiment of the present disclosure, a loading amount of the porous coating layer for a unit area of the porous polymer substrate is about 5.5 g/m² to 8 g/m².

According to an embodiment of the present disclosure, the porous coating layer includes the inorganic particles in a content of about 90 wt% to 95 wt% based on a total weight of the porous coating layer.

According to an embodiment of the present disclosure, the separator further includes a second polymer coating layer formed on a surface of the porous coating layer, and the second polymer coating layer includes the polymer including the amine group.

According to an embodiment of the present disclosure, at least a portion of the polymer including the amine group in the second polymer coating layer is crosslinked with the polymer binder of the porous coating layer.

According to an embodiment of the present disclosure, the second polymer coating layer further includes dextrin.

According to another embodiment of the present disclosure, there is provided an electrochemical device including: a positive electrode; a negative electrode; and a separator disposed between the positive electrode and the negative electrode, and the separator is the separator for the electrochemical device described above.

The electrochemical device may be a lithium secondary battery.

### Advantageous Effects

The separator for the electrochemical device according to an embodiment of the present disclosure provides an improved dimensional stability in the wet state where the separator is impregnated with the electrolyte solution. For example, the separator exhibits a thermal shrinkage rate of less than about 10 % in the TD direction under a high temperature condition of about 130 °C or higher, and therefore, the exposure of an electrode caused from the thermal shrinkage of the separator may be prevented.

### Brief Description of the Drawings

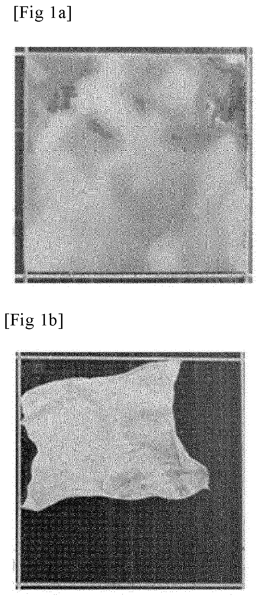

Fig. 1a and 1b are images of separators of Example 1 and Comparative Example 1, respectively, which are each inserted into a pouch with an electrolyte solution, stored in a 135 °C convection oven for 30 minutes, and then, taken out from the oven to check the appearance of the separator according to experimental examples.

The figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### Mode for Invention

Hereinafter, embodiments of the present disclosure will be described in detail to enable the practicing by one of ordinary skill in the art to which the present disclosure belongs. However, the embodiments are merely examples, and the scope of the present disclosure is not limited thereto.

In the descriptions herein, the term "including" is used to enumerate materials, compositions, devices, and methods useful in the present disclosure, and is not intended to limit the present disclosure to the enumerated examples.

In the descriptions herein, a singular word includes the plural unless otherwise defined.

In the descriptions herein, the expression "A and/or B" indicates "A and B, or A or B."

In the descriptions herein, when a component is provided "on" a specific part, this description does not exclude a case where another component is disposed between the component and the specific part, and indicates that another component may be further disposed therebetween, unless otherwise described.

In the descriptions herein, the unit "%" indicates "% by weight" unless otherwise expressly indicated.

In the descriptions herein, terms such as "about" and "substantially" are used to describe a range of numerical values or a degree, or an approximation thereto in consideration of inherent manufacturing and material tolerances, and are intended to prevent infringers from unfairly taking advantage of the present disclosure that describes precise or absolute numerical values to aid the understanding of the present disclosure.

In the descriptions herein, an "electrochemical device" indicates, for example, a primary battery, a secondary battery, and a supercapacitor.

In the descriptions herein, the "wet state" refers to the state where a separator is impregnated with at least a portion of an electrolyte solution.

A separator may include a porous coating layer, which includes a polymer binder and inorganic particles, on at least one surface of a porous substrate. The inorganic particles are connected together by the polymer binder to form interstitial volumes, and lithium ions may move through the interstitial volumes. In addition to immobilizing the inorganic particles, the polymer binder may impart an adhesion to the porous coating layer such that the porous coating layer may adhere to each of the porous substrate and an electrode.

The porous coating layer including the polymer binder and the inorganic particles may prevent the thermal shrinkage of the porous polymer substrate, and the separator including the porous coating layer exhibits the excellent dimensional stability in the dry state where no electrolyte solution exists. However, in the wet state where the separator is impregnated with the electrolyte solution, the polymer binder swells by the electrolyte solution, or the separator is exposed to a temperature of about 130 °C or higher by the operation of the lithium secondary battery including the separator, and as a result, the adhesion of the polymer binder is degraded. In this high temperature wet state, the adhesion of the porous coating layer decreases, and the separator shrinks significantly. In particular, in a cylindrical battery in which an electrode assembly is wound up and inserted into a case in a state where a tension is applied to the electrode assembly, a relatively low adhesion is required between the electrodes and the separator, as compared to that in a pouch type battery, and therefore, the content of the polymer binder is low, which further decreases the dimensional stability in the wet state.

In order to avoid this problem, the present disclosure provides a separator, which ensures the dimensional stability under the conditions of the high temperature and the wet state while maintaining the relatively low content of the polymer binder in the porous coating layer.

An embodiment of the present disclosure provides a separator for an electrochemical device, which includes a porous polymer substrate and a porous coating layer formed on at least one surface of the porous polymer substrate. Here, the porous coating layer includes inorganic particles and a polymer binder, the inorganic particles have a coating layer of a polymer including an amine group on their surfaces, and at least a portion of the polymer binder is crosslinked with the polymer including the amine group.

According to an embodiment of the present disclosure, the porous polymer substrate is a porous membrane with a plurality of pores, and electrically insulates the positive electrode and the negative electrode from each other to prevent shorts. For example, when the electrochemical device is a lithium secondary battery, the porous polymer substrate is an ion-conductive barrier that may allow the passage of lithium ions therethrough while blocking the electrical contact between the positive electrode and the negative electrode. At least a portion of the pores may form a three-dimensional network that connects the surface and the interior of the porous polymer substrate, and a fluid may pass through the porous polymeric substrate via the pores.

According to an embodiment of the present disclosure, the porous polymer substrate uses a material physically and chemically stable for the electrolyte solution, which is an organic solvent. For example, the porous polymer substrate includes polyolefins such as polyethylene, polypropylene, and polybutylene, and resins such as polyvinyl chloride, polyethylene terephthalate, polycycloolefin, polyethersulfone, polyamide, polyimide, polyimidamide, nylon, polytetrafluoroethylene, and copolymers or mixtures thereof, but is not limited thereto. For example, a polyolefin-based resin may be used. The polyolefin-based resin may be processed to have a relatively thin thicknesses, and may easily be coated with a coating slurry, which is suitable for manufacturing an electrochemical device having the higher energy density.

According to an embodiment of the present disclosure, the porous polymer substrate has a monolayer or multilayer structure. The porous polymer substrate may include two or more polymer resin layers having different melting points (Tm), to provide the shutdown function in the event of the high temperature runaway of a battery. For example, the porous polymer substrate includes a polypropylene layer having a relatively high melting point and a polyethylene layer having a relatively low melting point. Further, the porous polymer substrate may have a three-layer structure in which polypropylene, polyethylene, and polypropylene are laminated in this order. The polyethylene layer may shut down the pores by melting as the temperature of a battery rises to a predetermined temperature or more, thereby preventing the thermal runaway of the battery.

According to an embodiment of the present disclosure, the thickness of the porous polymer substrate is about 1 µm to 100 µm. For example, the thickness of the porous polymer substrate may be about 10 µm to 90 µm, about 20 µm to 80 µm, about 30 µm to 70 µm, or about 40 µm to 60 µm. Further, the thickness of the polymer substrate may be about 1 µm to 30 µm. For example, the thickness of the polymer substrate may be about 5 µm to 15 µm, or about 8 µm to 13 µm. By adjusting the thickness of the porous polymer substrate in the range above, the volume of the electrochemical device may be minimized while electrically insulating the positive electrode and the negative electrode, so that the amount of active materials included in the electrochemical device may be increased.

According to an embodiment of the present disclosure, the porous polymer substrate includes pores having an average diameter of about 0.01 µm to 1 µm. For example, the size of the pores included in the porous polymer substrate may be about 0.01 µm to 0.09 µm, about 0.02 µm to 0.08 µm, about 0.03 µm to 0.07 µm, or about 0.04 µm to 0.06 µm. Further, the size of the pores may be about 0.02 µm to 0.06 µm. By adjusting the pore size of the porous polymer substrate in the range above, the air permeability and the ion conductivity of the entire manufactured separator may be controlled.

According to an embodiment of the present disclosure, the porous polymer substrate has the air permeability of about 10 s/100 cc to 100 s/100 cc. For example, the air permeability of the porous polymer substrate may be about 10 s/100 cc to 90 s/100 cc, about 20 s/100 cc to 80 s/100 cc, about 30 s/100 cc to 70 s/100 cc, or about 40 s/100 cc to 60 s/100 cc. Further, the air permeability of the porous polymer substrate may be about 50 s/100 cc to 70 s/100 cc. When the air permeability of the porous polymer substrate falls in the range above, the manufactured separator may provide the air permeability in the range suitable for ensuring the power output and the cycle characteristics of the electrochemical device.

According to an embodiment of the present disclosure, the air permeability (s/100 cc) refers to the passage time (seconds) of about 100 cc of air through the porous polymer substrate or the separator having a predetermined area under a predetermined pressure. The air permeability may be measured using an air permeability tester (Gurley densometer) according to ASTM D726-58, ASTM D726-94, or JIS-P8117. For example, the 4110N equipment of Gurley may be used to measure the passage time of about 100 cc of air through a sample with the size of about 1 in² (or about 6.54 cm²) under an air pressure of about 0.304 kPa or a water pressure of about 1.215 kN/m². Further, for example, the EG01-55-1MR equipment of Asahi Seico may be used to measure the passage time of about 100 cc of air through a sample with the size of about 1 in² under a constant water pressure of 4.8 inches at room temperature.

According to an embodiment of the present disclosure, the porous polymer substrate may have the porosity of about 10 vol% to 60 vol%. For example, the porosity of the porous polymer substrate may be about 15 vol% to 55 vol%, about 20 vol% to 50 vol%, about 25 vol% to 45 vol%, or about 30 vol% to 40 vol%. Further, the porosity of the porous polymer substrate may be about 30 vol% to 50 vol%. When the porosity of the porous polymer substrate falls in the range above, the manufactured separator may provide the ion conductivity in the range suitable for ensuring the power output and the cycle characteristics of the electrochemical device.

According to an embodiment of the present disclosure, the porosity indicates the ratio of the volume of the pores to the total volume of the porous polymer substrate. The porosity may be measured by any method well-known in the art of the present disclosure. For example, the porosity may be measured by the Brunauer Emmett Teller (BET) method using an adsorption of nitrogen gas, a capillary flow porometer, or a water or mercury permeation method.

According to an embodiment of the present disclosure, the porous coating layer is formed on at least one surface of the porous polymer substrate, and includes inorganic particles and a polymer binder.

According to an embodiment of the present disclosure, the porous coating layer is formed in the manner that at least one surface of the porous polymer substrate is coated with a coating slurry including the inorganic particles, the polymer binder, and a dispersant. For example, the separator may be manufactured by coating at least one surface of the porous polymer substrate with the coating slurry, and then, drying the slurry to remove the dispersant. The porous coating layer includes the interstitial volumes among the inorganic particles connected by the polymer binder so as to allow the passage of lithium ions therethrough, and adheres to the porous polymer substrate so as to prevent the thermal shrinkage of the porous polymer substrate.

According to an embodiment of the present disclosure, the coating slurry includes the dispersant to dissolve or disperse at least a portion of the polymer binder and disperse the inorganic particles. The coating slurry is a slurry in which the polymer binder and the inorganic particles are uniformly dispersed by adjusting the type and the content of the dispersant. For example, the dispersant is one selected from the group consisting of water, ethanol, acetone, isopropyl alcohol (IPA), dimethylacetamide (DMAc), dimethylformamide (DMF), N-methyl-2-pyrrolidone (NMP), acetonitrile, and combinations thereof. By using the dispersant described above, it is possible to form the porous coating layer in which the inorganic particles are uniformly dispersed.

According to an embodiment of the present disclosure, the coating slurry has a viscosity of about 100 cps to 1,000 cps. For example, the viscosity of the coating slurry may be about 200 cps to 900 cps, about 300 cps to 800 cps, about 400 cps to 700 cps, or about 500 cps to 600 cps. Further, the viscosity of the coating slurry may be about 300 cps to 800 cps. When the viscosity of the coating slurry is adjusted in the range above, the porous coating layer may be formed by continuously coating the porous polymer substrate with the coating slurry.

According to an embodiment of the present disclosure, the coating slurry further includes additives such as a dispersant, a surfactant, a defoamer, and a flame retardant, to enhance the dispersibility and the flame retardancy and improve the uniformity of the formed porous coating layer. For example, the dispersant may include one or more selected from the group consisting of oil-soluble polyamine, an oil-soluble amine compound, fatty acids, fatty alcohols, sorbitan fatty acid ester, tannic acid, and pyrogallic acid. When this type of dispersant is used, the stability of the coating slurry may be improved, and the uniformity of the porous coating layer formed by the coating slurry may be ensured.

According to an embodiment of the present disclosure, the additives are included in the content of about 0 wt% to 5 wt% based on the total weight of the coating slurry. For example, the content of the additives may be about 0.01 wt% to 4 wt%, about 0.1 wt% to 3 wt%, or about 1 wt% to 2 wt%. Further, the content of the additives may be about 3 wt% to 5 wt%. By adjusting the content of the additives in the range above, it is possible to achieve the uniform dispersion and the stability of the inorganic particles included in the coating slurry.

According to an embodiment of the present disclosure, the dispersant included in the coating slurry is removed through a drying or a heating after the porous coating layer is formed. For example, the porous coating layer includes about 5 ppm or less of the dispersant. Further, the porous coating layer may be formed with an acrylic-based polymer binder, a copolymer binder, and inorganic particles. During the process of removing the dispersant, a plurality of pores is formed in the surface and the inside of the porous coating layer. The pores include the interstitial volumes formed among the inorganic particles, and has the structure of the three-dimensional network through which a fluid can pass.

According to an embodiment of the present disclosure, the thickness of the porous coating layer is about 0.1 µm to 10 µm. For example, the thickness of the porous coating layer may be about 0.5 µm to 9.5 µm, about 1.0 µm to 9.0 µm, about 1.5 µm to 8.5 µm, about 2.0 µm to 8.0 µm, about 2.5 µm to 7.5 µm, about 3.0 µm to 7.0 µm, about 3.5 µm to 6.5 µm, about 4.0 µm to 6.0 µm, or about 4.5 µm to 5.5 µm. Further, the thickness of the porous coating layer may be about 0.5 µm to 5 µm. Further, the thickness of the porous coating layer may be about 0.5 µm to 2 µm. By adjusting the thickness of the porous coating layer in the range above, the shrinkage of the porous polymer substrate may be minimized, and the stable adhesion to the porous polymer substrate may be achieved.

According to an embodiment of the present disclosure, the porous coating layer includes inorganic particles having a coating layer of a polymer including an amine group on the surfaces thereof, and a polymer binder, and at least a portion of the polymer binder is crosslinked with the polymer including the amine group. For example, the polymer binder may include two or more different types of polymer binders, at least one of the polymer binders may be crosslinked with the polymer including the amine group. The polymer binder, which is crosslinked with the polymer including the amine group, forms a physical or chemical bond with the polymer including the amine group. Further, the polymer binder, which is crosslinked with the polymer including the amine group, may be thermally crosslinked via the amine group. The polymer binder is bonded with one or more inorganic particles through the crosslinking with the coating layer of the inorganic particles, thereby forming the interstitial volumes. The polymer binder forms and maintains a stronger bond with the inorganic particles having the coating layer, as compared to the inorganic particles having no coating layer, and the porous coating layer including the polymer binder may exhibit the reduced thermal shrinkage rate in the high temperature wet state.

According to an embodiment of the present disclosure, electrochemically stable inorganic particles are used. The inorganic particles are not particularly limited as long as oxidation and/or reduction reactions do not occur in an operation voltage range of the electrochemical device (*e.g.,* 0 V to 5 V based on Li/Li⁺). For example, when inorganic particles with a high dielectric constant are used, the inorganic particles contribute to increasing the dissociation of electrolyte salt, for example, lithium salt in the liquid electrolyte, which improves the ion conductivity of the electrolyte solution. For these reasons, the inorganic particles may include inorganic particles with the high dielectric constant of 5 or more, for example, 10 or more. Non-limiting examples of the inorganic particles with the dielectric constant of 5 or more include BaTiO₃, Pb(Zr,Ti)O₃(PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, and mixtures thereof.

Further, the inorganic particles may be inorganic particles having a lithium ion transport capability, *i.e.,* a capability of transporting lithium ions while containing lithium elements without storing lithium. Non-limiting examples of the inorganic particles having the lithium ion transport capability include (LiAlTiP)ₓO_{y} series glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), and 14Li₂O-9Al₂O₃-38TiO₂-39P₂O₅, lithium germanium thiophosphate (LiₓGe_{y}P_{z}S_{w}, 0<x<4, 0<y<1, 0<z<1, 0<w<5) such as lithium lanthanum titanate (LiₓLa_{y}TiO₃, 0<x<2, 0<y<3) and Li_{3.25}Ge_{0.25}P_{0.75}S₄, lithium nitride (LiₓN_{y}, 0<x<4, 0<y<2) such as Li₃N, SiS₂ series glass (LiₓSi_{y}S_{z}, 0<x<3, 0<y<2, 0<z<4) such as Li₃PO₄-Li₂S-SiS₂, P₂S₅ series glass (LiₓP_{y}S_{z}, 0<x<3, 0<y<3, 0<z<7) such as LiI-Li₂S-P₂S₅, and mixtures thereof.

Further, the inorganic particles may be inorganic particles that have the flame retardant property, and thus, may impart the flame retardant property to the separator or prevent the rapid rise of the temperature inside the electrochemical element. Non-limiting examples of the inorganic particles having the flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof.

According to an embodiment of the present disclosure, the average particle diameter (D50) of the inorganic particles is about 50 nm to 5,000 nm. For example, the average particle diameter (D50) of the inorganic particles may be about 100 nm to 4,500 nm, about 200 nm to 4,000 nm, about 300 nm to 3,000 nm, about 400 nm to 2,000 nm, or about 500 nm to 1,000 nm. Further, the average particle diameter of the inorganic particles may be about 200 nm to 500 nm. When the average particle diameter of the inorganic particles is less than about 50 nm, the specific surface area increases, and therefore, additional polymer binders are required to bond the inorganic particles together, which is disadvantageous in terms of the electric resistance. When the average particle diameter of the inorganic particles exceeds about 5,000 nm, the uniformity of the surface of the coating layer is degraded, which may cause a damage to the porous polymer substrate or electrode during a lamination process.

According to an embodiment of the present disclosure, the aspect ratio of the inorganic particles is about 1 to 2. For example, the aspect ratio of the inorganic particles may be about 1.1 to 1.9, about 1.2 to 1.8, about 1.3 to 1.7, or about 1.4 to 1.6. By adjusting the aspect ratio of the inorganic particles in the range above, the polymer binder may easily move through the pores among the inorganic particles, and consequently, it is possible to form the porous coating layer including the interstitial volumes through which lithium ions can move.

According to an embodiment of the present disclosure, the BET specific surface area of the inorganic particles is about 5 m²/g to 25 m²/g. For example, the BET specific surface area of the inorganic particles may be about 6 m²/g to 24 m²/g, about 7 m²/g to 23 m²/g, about 8 m²/g to 22 m²/g, about 9 m²/g to 21 m²/g, about 10 m²/g to 20 m²/g, about 11 m²/g to 19 m²/g, about 12 m²/g to 18 m²/g, about 13 m²/g to 17 m²/g, or about 14 m²/g to 26 m²/g. By adjusting the BET specific surface area of the inorganic particles in the range above, the movement of the polymer binder through the pores among the inorganic particles may be controlled.

According to an embodiment of the present disclosure, the density of the inorganic particles is about 3 g/cm³ to 9 g/cm³. For example, the density of the inorganic particles may be about 3.5 g/cm³ to 8.5 g/cm³, about 4 g/cm³ to 8 g/cm³, about 4.5 g/cm³ to 7.5 g/cm³, about 5 g/cm³ to 7 g/cm³, or about 5.5 g/cm³ to 6.5 g/cm³. Further, the density of the inorganic particles may be about 3 g/cm³ to 4.5 g/cm³. By adjusting the density of the inorganic particles in the range above, the uniform dispersion of the inorganic particles in the porous coating layer may be achieved, and the thermal shrinkage of the porous polymer substrate may be reduced.

According to an embodiment of the present disclosure, the inorganic particles have, on the surfaces thereof, a coating layer including a polymer including an amine group. For example, each inorganic particle and the coating layer may form a core-shell structure. Further, each inorganic particle may have a spherical shape, and the coating layer may entirely enclose the inorganic particle with a constant thickness.

According to an embodiment of the present disclosure, the polymer including the amine group includes both a catechol group and the amine group. For example, the polymer including the amine group may be one or more selected from dopamine and derivatives thereof. The polymer including the amine group may be physically or chemically bonded to the inorganic particles via the catechol group to form the coating layer, and may expose one or more amine groups on the surface of the coating layer. For example, the inorganic particles may include one or more hydroxy groups on their surfaces or have the surfaces processed to have the hydroxy groups, and the polymer including the amine group is bonded with the hydroxy groups through hydrogen bonds via the catechol groups to form the coating layer while exposing the amine group on the surface of the coating layer. The method of bonding the polymer including the amine group and the inorganic particles to each other is not limited thereto.

According to an embodiment of the present disclosure, the thickness of the coating layer formed on the surfaces of the inorganic particles is about 2 nm to 20 nm. For example, the thickness of the coating layer formed on the surfaces of the inorganic particles may be about 2 nm to 18 nm, about 4 nm to 16 nm, about 6 nm to 14 nm, or about 8 nm to 12 nm. Further, the thickness of the coating layer may be about 2 nm to 5 nm. By adjusting the thickness of the coating layer in the range above, the coating layer is prevented from delaminating from the inorganic particles under the operation condition of the electrochemical device, and the crosslink with the polymer binder is formed so that the thermal shrinkage of the separator may be reduced.

According to an embodiment of the present disclosure, the polymer binder is crosslinked with the polymer including the amine group, and includes at least one selected from the group consisting of dextrin, polyetheretherketone (PEEK), polyethersulfone (PES), and polyacrylamide (PAAm). The polymer binder is crosslinked with the polymer including the amine group via a carboxy group. Further, the polymer including the amine group is dopamine, and the polymer binder forms a hydrogen bond with a hydroxy group of the dopamine via the amine group. Since the polymer binder has a high glass transition temperature (Tg) or decomposition temperature (Td), the polymer binder may impart the dimensional stability at high temperatures to the separator, and simultaneously, form the bond with the coating layer, thereby preventing the deformation of the porous coating layer.

According to an embodiment of the present disclosure, the polymer binder is crosslinked with the polymer including the amine group, and includes a (co)polymer of monomers selected from the group consisting of acrylate, acrylic acid, maleic acid, itaconic acid, methacrylic acid, and carboxyethyl acrylate. The (co)polymer may include a carboxy group, and may be crosslinked with the amine group exposed on the surface of the coating layer through amide bonds. The polymer binder forms stable bonds with one or more inorganic particles, so that the interstitial volumes are formed, and the deformation of the porous coating layer may be prevented.

According to an embodiment of the present disclosure, the polymer binder further includes a fluorine-based polymer binder, in addition to being crosslinkable with the polymer including the amine group. For example, the fluorine-based polymer binder may be a homopolymer of vinylidene fluoride, a copolymer of vinylidene fluoride and another copolymerizable monomer, or a mixture thereof.

According to an embodiment of the present disclosure, the polymer binder includes the polymer crosslinkable with the polymer including the amine group, in the content of about 60 wt% to 80 wt% based on the total weight of the polymer binder. For example, about 66 wt% to 75 wt% of the polymer binder may be crosslinked with the polymer including the amine group, *i.e.,* the coating layer formed on the surfaces of the inorganic particles. When the content of the polymer binder crosslinkable with the inorganic particles having the coating layer is adjusted in the range above, it is possible to form the porous coating layer that does not deform in the high temperature wet state while allowing the passage of lithium ions therethrough.

According to an embodiment of the present disclosure, the porous coating layer includes the inorganic particles in the content of about 90 wt% to 95 wt% based on the total weight of the porous coating layer. For example, the porous coating layer may include the inorganic particles in the content of about 90 wt% to 95 wt%, about 91 wt% to 92 wt%, or about 93 wt% to 94 wt%. Further, the porous coating layer may include the inorganic particles in the content of about 92 wt% to 94 wt%. By adjusting the content of the inorganic particles in the range above, it is possible to manufacture the separator having the mechanical strength and the thermal characteristics, which are suitable for cylindrical batteries.

According to an embodiment of the present disclosure, the loading amount of the porous coating layer per unit area of the porous polymer substrate in the separator is about 5.5 g/m² to 8.0 g/m². For example, the loading amount of the porous coating layer may be about 5.7 g/m² to 7.8 g/m², about 5.9 g/m² to 7.6 g/m², about 6.1 g/m² to 7.4 g/m², about 6.3 g/m² to 7.2 g/m², about 6.5 g/m² to 7.0 g/m², or about 6.7 g/m² to 6.8 g/m². Further, the loading amount of the porous coating layer may be about 5.6 g/cm² to 6.5 g/cm². By adjusting the loading amount of the porous coating layer in the range above, the durability of the separator against the electrolyte solution may be ensured, so that the thermal shrinkage in the high temperature wet state may be reduced.

According to an embodiment of the present disclosure, the separator further includes a second polymer coating layer formed on the surface of the porous coating layer. For example, the second polymer coating layer may include a polymer including an amine group. Further, the polymer including the amine group in the second polymer coating layer may include both a catechol group and the amine group. For example, the polymer including the amine group may be one or more selected from dopamine and derivatives thereof.

According to an embodiment of the present disclosure, the second polymer coating layer is formed by coating the surface of the separator including the porous polymer substrate and the porous coating layer with the solution of the polymer including the amine group, and drying the solution. For example, the separator may be immersed in the solution of the polymer including the amine group, to obtain the separator having the second polymer coating layer including the polymer.

For example, the polymer including the amine group may be dopamine, and the separator including the porous polymer substrate and the porous coating layer may be immersed in the dopamine solution to obtain the separator having the second polymer coating layer including polydopamine. The immersing time may be about 40 hours to 48 hours, and the loading amount of polydopamine included in the second polymer coating layer may be about 0.0005 g/m² to 0.01 g/m². By adjusting the amount of polydopamine included in the second polymer coating layer in the range above, the thermal shrinkage rate of the separator may be reduced even in the high temperature wet state.

According to an embodiment of the present disclosure, at least a portion of the polymer including the amine group in the second polymer coating layer is crosslinked with the polymer binder of the porous coating layer. For example, the polymer binder included in the porous coating layer may be thermally crosslinked via the amine group. The crosslink may be performed by applying the solution of the polymer including the amine group to the surface of the porous coating layer, and then, drying the solution or performing a separate heat treatment after drying the solution. The porous coating layer and the second polymer coating layer may form and maintain the stronger bond through the crosslink between the polymers, and the separator having the bond may exhibit the further reduced thermal shrinkage rate in the high temperature wet state.

According to an embodiment of the present disclosure, the second polymer coating layer further includes dextrin. The dextrin imparts the durability to the second polymer coating layer, and improves the dimensional stability of the separator including the second polymer coating layer. The dextrin may uniformly disperse the polymer including the amine group, and maintain the dimensional stability even when an external force is applied as the electrode adhering to or disposed adjacent to the separator contracts or expands. Further, the dextrin is cyclodextrin, and may be, for example, one or more selected from the group consisting of α-cyclodextrin, β-cyclodextrin, and γ-cyclodextrin.

According to an embodiment of the present disclosure, the second polymer coating layer includes the polymer including the amine group and the dextrin in the weight ratio of about 1:500 to 1:1000. For example, the second polymer coating layer may include polydopamine and the dextrin in the weight ratio of about 1:600 to 1:900, or about 1:700 to 1:800. By adjusting the content of the polydopamine and the dextrin in the range above, both the uniform dispersion of the polydopamine included in the porous coating layer and the thermal shrinkage rate of the separator in the high temperature wet state may be achieved.

According to an embodiment of the present disclosure, the separator for the electrochemical device has the air permeability of about 50 s/100 cc to about 150 s/100 cc. For example, the air permeability of the separator may be about 60 s/100 cc to 140 s/100 cc, about 70 s/100 cc to 130 s/100 cc, about 80 s/100 cc to 120 s/100 cc, or about 90 s/100 cc to 110 s/100 cc. Further, the air permeability of the separator may be about 100 s/100 cc to 120 s/100 cc. When the air permeability of the separator falls in the range above, the power output, stability, and cycle characteristics of the electrochemical device may be ensured.

According to an embodiment of the present disclosure, the thermal shrinkage rate of the separator for the electrochemical device is less than about 10 %. For example, the thermal shrinkage rate of the separator in the wet state is less than about 10 %. The thermal shrinkage rate in the wet state indicates the dimensional change rate, for example, when the separator is exposed to 135 °C for about 30 minutes in a state of being immersed in the electrolyte solution.

According to an embodiment of the present disclosure, when a cell is manufactured using the separator for the electrochemical device described above, the cell has the electric resistance of about 0.5 Ohm to 1.5 Ohm. For example, the electric resistance of the cell may be about 0.6 Ohms to 1.4 Ohms, about 0.7 Ohms to 1.3 Ohms, about 0.8 Ohms to 1.2 Ohms, or about 0.9 Ohms to 1.1 Ohms. Further, the electric resistance of the cell may be about 0.6 Ohm to 0.8 Ohm.

Another embodiment of the present disclosure provides an electrochemical device including a positive electrode, a negative electrode, and a separator disposed between the positive electrode and the negative electrode. Here, the separator is the above-described separator for the electrochemical battery. The electrochemical device may be manufactured by inserting an electrode assembly including a positive electrode, a negative electrode, and a separator disposed between the positive and negative electrodes into a case or pouch, and sealing the case or pouch. Before sealing the case or pouch, the electrode assembly may be impregnated with the electrolyte solution by injecting the electrolyte solution into the case or pouch. The shape of the case or pouch is not limited. For example, the electrochemical device may be a lithium secondary battery having a cylindrical, prismatic, coin, or pouch shape.

According to an embodiment of the present disclosure, the positive electrode and the negative electrode are each formed by coating at least one surface of a current collector with an electrode active material and drying the coating. The current collector may be a material that has the conductivity without causing chemical changes in the electrochemical device. The current collector for the positive electrode may be, for example, but not be limited to, aluminum, nickel, titanium, calcined carbon, a stainless steel, or aluminum or a stainless steel with its surface processed with carbon, nickel, titanium, silver or the like. The current collector for the negative electrode may be, for example, but not be limited to, copper, nickel, titanium, calcined carbon, a stainless steel, or copper or a stainless steel with its surface processed with carbon, nickel, titanium, silver or the like. The current collector may be manufactured in various forms such as a metal thin plate, a film, foil, a net, a porous material, and a foam.

According to an embodiment of the present disclosure, the positive electrode includes a positive electrode current collector, and a positive electrode active material layer formed on at least one surface of the current collector and including a positive electrode active material, a conductive agent, and a binder resin. The positive electrode active material may include one compound or a mixture of two or more compounds among a layered compound or a compound substituted with one or more transition metals, such as lithium manganese composite oxides (*e.g.,* LiMn₂O₄ and LiMnO₂), lithium cobalt oxides (*e.g.,* LiCoO₂), and lithium nickel oxides (*e.g*., LiNiO₂); lithium manganese oxides such as compounds of the formula Li₁₊ₓMn₂₋ₓO₄ (where x represents 0 to 0.33), LiMnO₃, LiMn₂O₃, and LiMnO₂; lithium copper oxides (*e.g*., Li₂CuO₂); vanadium oxides such as LiV₃O₈, LiV₃O₄, V₂O₅, and Cu₂V₂O₇; Ni-site lithium nickel oxides expressed by the formula LiNi₁₋ₓMₓO₂ (where M=Co, Mn, Al, Cu, Fe, Mg, B, or Ga, and x=0.01 to 0.3); lithium manganese composite oxides expressed by the formula LiMn₁₋ₓMₓO₂ (where M=Co, Ni, Fe, Cr, Zn, or Ta, and x=0.01 to 0.1) or Li₂Mn₃MO₈ (where M=Fe, Co, Ni, Cu, or Zn); LiMn₂O₄ where a portion of Li in the formula is substituted by alkaline earth metal ions; disulfide compounds; and Fe₂(MoO₄)₃.

According to an embodiment of the present disclosure, the negative electrode includes a negative electrode current collector, and a negative electrode active material layer formed on at least one surface of the current collector and including a negative electrode active material, a conductive agent, and a binder resin. The negative electrode may include, as the negative electrode active material, one compound or a mixture of two or more compounds selected from lithium metal oxides and carbon such as hard carbon and graphitic carbon; LixFe₂O₃ (0≤x≤1); LiₓWO₂ (0≤x≤1); silicon-based materials such as Si, SiOₓ (0<x<2), SiC, and Si alloys; metal composite oxides such as SnₓMe₁₋ₓMe'_{y}O_{z} (Me: Mn, Fe, Pb, Ge; Me': Al, B, P, Si, the elements of Groups 1, 2, 3 of the periodic table, halogen; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxides.

According to an embodiment of the present disclosure, the conductive agent is any one conductive material or a mixture of two or more conductive materials selected from the group consisting of graphite, carbon black, carbon fiber or metal fiber, metal powder, conductive whisker, conductive metal oxides, carbon nanotube, activated carbon, and polyphenylene derivatives. The carbon nanotube has a cylindrical shape of which graphite sheet has a nanoscale diameter, and has the sp² bond structure, which exhibits the characteristics of a conductor or a semiconductor according to the curling angle and structure of the graphite sheet. Carbon nanotubes may be classified into a single-walled carbon nanotube (SWCNT), a double-walled carbon nanotube (DWCNT), and a multi-walled carbon nanotube (MWCNT) depending on the number of bonds that make up its walls, and an appropriate carbon nanotube may be selected according to the application of a dispersion. For example, the conductive agent may be one conductive material or a mixture of two or more conductive materials selected from the group consisting of natural graphite, artificial graphite, super-p, acetylene black, ketchen black, channel black, furnace black, lamp black, thermal black, denka black, aluminum powder, nickel powder, zinc oxide, potassium titanate, and titanium oxide.

According to an embodiment of the present disclosure, the binder resin may be a binder resin typically used for electrodes of an electrochemical device. Non-limiting examples of the binder resin include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, but may not be limited thereto.

According to an embodiment of the present disclosure, the electrolyte solution is an electrolyte solution obtained by dissolving or dissociating a salt having, for example, the structure of A⁺B⁻ in an organic solvent, in which A⁺ includes ions consisting of alkali metal cations such as Li⁺, Na⁺, and K⁺, or combinations thereof, and B⁻ includes ions consisting of anions such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or combinations thereof, and the organic solvent includes propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (γ-butyrolactone), or a mixture thereof.

For example, the electrolyte solution may include a solvent in which the weight ratio of ethylene carbonate (EC)/ethylmethyl carbonate (EMC) is 3/7, or a solvent in which the weight ratio of ethylene carbonate (EC)/ethylmethyl carbonate (EMC)/dimethyl carbonate (DMC) is 20/5/75, and in this case, the dimensional stability of the separator according to the example described above may be maximized.

According to an embodiment of the present disclosure, the electrochemical device including the electrode assembly described above is a lithium secondary battery. Further, the separator for the electrochemical device according to the present disclosure that includes the electrode assembly described above may be similarly applied to a sodium secondary battery manufactured using sodium ions as the positive electrode active material.

Unlike the lithium secondary battery described above, a lithium secondary battery according to another embodiment of the present disclosure may be an all-solid-state battery.

The battery described above may be used as a unit cell, and also be used for a battery module including the unit cell, a battery pack including the battery module, or a device including the battery pack as a power source. Examples of the device include small-size devices such as computers, mobile phones, and power tools, and medium- and large-size devices such as electric vehicles (EV), hybrid electric vehicles (HEV), and plug-in hybrid electric vehicles (PHEV); electric two-wheeled vehicles including electric bicycles (E-bikes) and electric scooters (E-scooters); electric golf carts; and power storage systems.

Hereinafter, the present disclosure will be described in more detail with reference to Examples and Comparative Examples. The Examples and the Experimental Examples herein below are intended to illustrate the present disclosure, the embodiments according to the present disclosure may be modified in various ways, and the present disclosure is not limited to the Examples and the Experimental Examples.

### Example 1

### Preparation of Inorganic Particles with Coating Layer Formed thereon

In 1,000 mL of a basic aqueous solution (Tris-buffer, pH 8.5), 30 g of Al₂O₃ (particle diameter: 400 nm) as inorganic particles and 2 g of dopamine as a polymer including an amine group were mixed, stored at 20 °C for 4 hours, repeatedly subjected to an ultrasonic cleaning with secondary distilled water, and completely dried at 50 °C to obtain inorganic particles with a polydopamine coating layer (thickness: 2 nm) formed thereon.

### Preparation of Coating Slurry

At room temperature (25 °C), 1.5 g of polyacrylate as a polymer binder, 30 g of the inorganic particles having the polydopamine coating layer, and 0.2 g of an Si-based surfactant as an additive were added to 50 mL of water, and stirred by a shaker for 60 minutes, to prepare a coating slurry in which the polymer binder and the inorganic particles were dispersed.

### Preparation of Porous Polymer Substrate

A polyethylene film having a thickness of 9 µm (MI: 0.2 g/10 min, Tₘ: 135 °C, porosity: 45 %, and average pore size: 45 nm) was used as a porous polymer substrate.

### Manufacture of Separator

Both surfaces of the polyethylene film were coated with the coating slurry above using a bar coater, to form a coating layer with a thickness of 2 µm for the coating of each surface and a loading amount of 6.3 g/m².

A process of removing the dispersant was repeated five times by applying low-temperature air volume of 50 °C to the polyethylene film with the coating layer formed thereon, and a drying was performed at 100 °C for 10 minutes to perform the crosslink between polydopamine and polyacrylic acid, to manufacture a separator having an entire thickness of 13 µm.

### Example 2

The separator was manufactured in the same manner as Example 1 above, except that polymaleic acid was used as a polymer binder, and the loading amount of the porous coating layer was 6.0 g/m².

### Example 3

The separator was manufactured in the same manner as Example 1 above, except that dextrin was used as a polymer binder, and the loading amount of the porous coating layer was 6.4 g/m².

### Example 4

The separator was manufactured in the same manner as Example 1 above, except that PAAm was used as a polymer binder, and the loading amount of the porous coating layer was 5.7 g/m².

### Example 5

The separator was manufactured in the same manner as Example 1 above, except that dextrin and PVdF-HFP were used as polymer binders in a weight ratio of 3:1.

### Example 6

In a petridish at room temperature (25 °C), 2 mg/mL of dopamine and 50 mg/mL of dextrin were added to 20 mM of a basic buffer solution (Tris-HCl buffer), and the addition amount of dopamine and dextrin was adjusted such that the final content of dopamine and dextrin became 1:1000. Then, the lid of the petridish was partially opened to prepare a dopamine and dextrin solution with 9 ppm dissolved oxygen and pH 8.

The separator prepared in Example 1 above was immersed in the solution above for 48 hours, and then, dried at 60 °C for 12 hours, to manufacture a separator on which a second polymer coating layer having a thickness of 0.5 µm was formed.

### Comparative Example 1

The separator was manufactured in the same manner as Example 1 above, except that when preparing the coating slurry in the separator for the electrochemical device of Example 1 above, the contents of the inorganic particles and dopamine were adjusted to 30 g and 0.5 g, respectively, (thickness of the coating layer: 1 nm).

### Comparative Example 2

The separator was prepared in the same manner as Example 1 above, except that polyurethane was used as the polymer binder in the separator for the electrochemical device of Example 1 above.

### Comparative Example 3

The separator was prepared in the same manner as Example 1 above, except that inorganic particles having no coating layer were used in the separator for the electrochemical device of Example 1 above.

### Comparative Example 4

The separator was prepared in the same manner as Example 2 above, except that inorganic particles having no coating layer were used in the separator for the electrochemical device of Example 2 above.

### Comparative Example 5

The separator was prepared in the same manner as Comparative Example 2 above, except that inorganic particles having no coating layer were used in the separator for the electrochemical device of Comparative Example 2 above.

### Comparative Example 6

The separator was prepared in the same manner as Example 5 above, except that dextrin and PVdF-HFP were used as polymer binders in a weight ratio of 1:1 in the separator for the electrochemical device of Example 5.

### Experimental Examples. Verification of Physical Properties of Separator

Tables 1 and 2 herein below represent the physical properties of the separators manufactured according to the Examples and Comparative Examples, respectively.

### Verification of Improvement of Thermal Shrinkage Rate in Wet State

The separator of each of the Examples and the Comparative Examples was prepared as a 5 cm × 5 cm specimen, and inserted into an aluminum pouch with a size of 7 cm × 10 cm. The pouch was sealed after being filled with 1 g of an electrolyte solution.

The electrolyte solution was an electrolyte solution prepared by adding 3 mol of vinylene carbonate (VC), 1.5 mol of propanesulfone (PS), 1 mol of ethylene sulfate (ESa), and 1 mol of lithium salt LiPF₆ as additives to a solvent in which ethylene carbonate (EC)/ethyl methyl carbonate (EMC) were mixed at a weight ratio of 3/7.

After the sealed pouch was stored in a 135 °C convection oven for 30 minutes, the pouch was disassembled to take the separator, and the thermal shrinkage rate in the TD direction was calculated according to [(length of initial specimen-@135/length after storage for 0.5 hours)/(length of initial specimen)]×100 (%).

**[Table 1]**

| | Ex. 1 | Ex. 2 | Ex. 3 | Ex. 4 | Ex. 5 | Ex. 6 |
|---|---|---|---|---|---|---|
| Whether coating layer is formed on surfaces of inorganic particles | ○ | ○ | ○ | ○ | ○ | ○ |
| Thickness of polydopamine coating layer (nm) | 2 | 2 | 2 | 2 | 2 | 2 |
| Type of polymer binder (Weight ratio when mixed) | Polyacrylate | Polymaleic acid | Dextrin | PAAm | Dextrin, PVdF-HFP (3:1) | Polyacrylate |
| Thickness of separator (µm) | 13.0 | 13.0 | 13.0 | 13.0 | 13.0 | 13.5 |
| Loading amount of porous coating layer (g/m²) | 6.3 | 6.0 | 6.4 | 5.7 | 5.6 | 6.3 |
| Thermal shrinkage in wet state (@135 °C/0.5 h (TD (%)) | 3 | 2 | 2 | 6 | 9 | 1 |

**[Table 2]**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Whether coating layer is formed on surfaces of inorganic particles | ○ | ○ | × | × | × | ○ |
| Thickness (nm) of polydopamine coating layer | 1 | 2 | - | - | - | 2 |
| Type of polymer binder (weight ratio when being mixed) | Polyacrylate | Polyurethane | Polyacrylate | Polymaleic acid | Polyurethane | Dextrin , PVdF-HFP (1:1) |
| Thickness (µm) of separator | 13.0 | 13.0 | 13.0 | 13.0 | 13.0 | 13.0 |
| Loading amount of porous coating layer (g/m²) | 6.2 | 6.3 | 6.3 | 6.1 | 6.1 | 5.2 |
| Thermal shrinkage rate in wet state (@135 °C/0.5 h (TD (%)) | 10 | 27 | 30 | 28 | 29 | 36 |

## Claims

1. A separator for an electrochemical device, the separator comprising:
a porous polymer substrate; and
a porous coating layer formed on at least one surface of the porous polymer substrate,
wherein the porous coating layer includes inorganic particles and a polymer binder,
the inorganic particles include a coating layer of a polymer including an amine group on surfaces of the inorganic particles, and
at least a portion of the polymer binder is crosslinked with the polymer including the amine group.

2. The separator for the electrochemical device according to claim 1, wherein the polymer including the amine group is dopamine or a derivative thereof.

3. The separator for the electrochemical device according to claim 1, wherein a thickness of the coating layer is 2 nm to 20 nm.

4. The separator for the electrochemical device according to claim 1, wherein the polymer binder includes one or more selected from the group consisting of dextrin, polyetheretherketone, polyethersulfone, and polyacrylamide.

5. The separator for the electrochemical device according to claim 1, wherein the polymer binder includes a (co)polymer of a monomer selected from the group consisting of acrylate, acrylic acid, maleic acid, itaconic acid, methacrylic acid, and carboxyethyl acrylate.

6. The separator for the electrochemical device according to claim 1, wherein 60 wt% to 80 wt% of the polymer binder is crosslinked with the polymer including the amine group.

7. The separator for the electrochemical device according to claim 1, wherein a loading amount of the porous coating layer for a unit area of the porous polymer substrate is 5.5 g/m² to 8 g/m².

8. The separator for the electrochemical device according to claim 1, wherein the porous coating layer includes the inorganic particles in a content of 90 wt% to 95 wt% based on a total weight of the porous coating layer.

9. The separator for the electrochemical device according to claim 1, the separator further comprising:
a second polymer coating layer formed on a surface of the porous coating layer,
wherein the second polymer coating layer includes the polymer including the amine group.

10. The separator for the electrochemical device according to claim 9, wherein at least a portion of the polymer including the amine group in the second polymer coating layer is crosslinked with the polymer binder of the porous coating layer.

11. The separator for the electrochemical device according to claim 9, wherein the second polymer coating layer further includes dextrin.

12. An electrochemical device comprising:
a positive electrode;
a negative electrode; and
a separator disposed between the positive electrode and the negative electrode,
wherein the separator is the separator for the electrochemical device according to claim 1.
